# EUROPEAN PATENT SPECIFICATION

(11) **EP 4 474 933 B1**
(45) Date of publication and mention of the grant of the patent: **26.08.2026**
(21) Application number: 24180481.4
(22) Date of filing: 06.06.2024
(51) Int. Cl.: G05B 23/02

(54) **PROBABILISTIC DETERMINATION OF ALARM PRIORITIES FOR SHELVING**
PROBABILISTISCHE BESTIMMUNG VON ALARMPRIORITÄTEN
DÉTERMINATION PROBABILISTE DE PRIORITÉS D'ALARME

(30) Priority: 08.06.2023 IN 202311039230
(43) Date of publication of application: 11.12.2024
(73) Proprietor: Schneider Electric Systems USA, Inc., Foxborough, MA 02035 (US)
(72) Inventor: Kabade, Prashant, 500049 Telangana (IN); Malayanur, PavanKumar, 500089 Telangana (IN); Johnson, Alexander Park, Houston, 77063 (US)
(74) Representative: Openshaw & Co.

(56) References cited:
- EP-B1- 3 187 950
- US-A1- 2010 211 192
- US-A1- 2023 076 662

## Description

### CROSS-REFERENCE TO RELATED APPLICATION

This application claims the benefit of Indian Patent Application No. 202311039230, filed June 8, 2023.

### BACKGROUND

Operator alarm limits are the first line of defense for an industrial process and should provide an operator with sufficient advance warning to understand and correct a problem before it becomes dangerous. Unfortunately, current methods for finding efficient values for alarm limits are not scientifically-based and can result in poor performance. Improper alarm limits lead to alarm flood, standing alarms, and nuisance alarms, all of which operators routinely ignore as 'false alarms' and which eventually lead to inefficient operation and cause major plant trips/emergency shut downs and accidents.

In a process control system, nuisance alarms are considered those alarms that do not generate a specific action or response from an operator. Alarm shelving is an important tool for assisting the operator to manage nuisance alarms in a process control system. Shelving is a facility where the operator is able to temporarily prevent an alarm from being displayed. A shelved alarm is removed from the displayed alarm list and does not re-annunciate until it is un-shelved. In other words, shelving temporarily hides an alarm that the operator considers to be irrelevant or distracting, thus enabling the operator to maintain focus on alarms that require attention. The presence of nuisance alarms can desensitize the operator, which can cause the operator to ignore other alarms or misdiagnose the situation, and is a common contributor to alarm management incidents. For example, important alarms can get lost among nuisance alarms, resulting in the operator being unaware that a truly important alarm was sounded.

Typically, alarms are shelved and un-shelved manually by the operator via a human machine interface (HMI). For example, System Advisor (available from Schneider Electric) provides shelving functionality. In System Advisor, shelving may be performed manually or automatically through use of Smart Rules defined by a Process Expert. There is a need for a decision support system that assists the operator when deciding whether to shelve an alarm. US 2010/211 192 A1 discloses an apparatus and a method for automated analysis of alarm data. US 2023/076 662 A1 discloses automatic suppression of non-actionable alarms with machine learning. EP 3 187 950 B1 disclose a method for managing alarms in a control system in a process plant comprising a plurality of equipment.

### SUMMARY

Aspects of the present disclosure provide support for operator decision-making in alarm shelving. Aspects of the present disclosure further use and analyze data to generate a recommended action to the operator and learn from operator actions to capture the knowledge of the operator for future decision-making.

In an aspect, a method of managing alarms in a process control system as defined in claim 1 is disclosed.

In another aspect, an alarm management system as defined in claim 8 is disclosed.

Other objects and features of the present invention will be in part apparent and in part pointed out herein.

### BRIEF DESCRIPTION OF THE DRAWINGS

FIG. 1 is a block diagram illustrating a process control system according to an embodiment.
FIG. 2 is a flow diagram illustrating an example process for alarm shelving according to an embodiment.
FIG. 3 is a block diagram illustrating further aspects of the control system of FIG. 1 according to an embodiment.
FIG. 4 illustrates an example architecture according to an embodiment.
FIG. 5 illustrates an example process for configuring alarm priority according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

As described above, alarm shelving is an important tool for assisting an operator to manage nuisance alarms in a process control system. Shelving is intended to temporarily hide alarms that the operator considers to be irrelevant or distracting, thus enabling the operator to maintain focus on alarms that require attention. Aspects of the present disclosure provide an alarm shelving tool embodying a decision support system and method that assists the operator when deciding whether to shelve an alarm.

The Engineering Equipment and Materials Users Association (EEMUA) published guidelines in 1999 that stated less than one alarm per ten minutes should be the goal while two alarms per ten minutes is manageable. On the other hand, five alarms in ten minutes likely poses excessive demands on an operator. Advantageously, aspects of the present disclosure provide system and method for assisting the operator to quickly render shelving decisions, which in turn improves operator and plant efficiency.

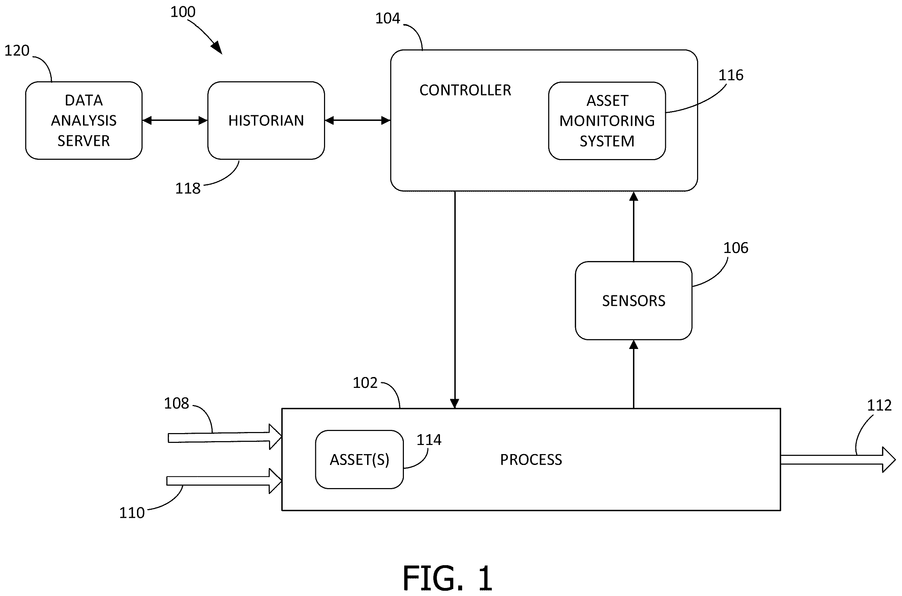

FIG. 1 displays the basic structure of an example process control system 100. In an embodiment, at least one process 102 is communicatively connected to a controller 104 and sensors 106. The process 102 has inputs 108 and 110 that comprise the necessary inputs for the process to create an output 112 using, for instance, chemical, electrical, and/or mechanical steps. In an embodiment, the input 108 includes energy for running process 102 and the input 110 includes raw or intermediate materials for use in process 102. The output 112 comprises products from the process 102 or energy production in the form of electricity or the like.

The sensors 106 may include IEDs (intelligent electronic devices). As used herein, an IED is a computational electronic device optimized to perform a particular function or set of functions. Examples of IEDs include smart utility meters, smart sensors, power quality meters, temperature transmitters, flow rate transmitters, pressure transmitters, online quality measurements, and other metering devices. IEDs may also be imbedded in variable speed drives (VSDs), uninterruptible power supplies (UPSs), circuit breakers, relays, transformers, or any other equipment or apparatus. IEDs may be used to perform monitoring and control functions in a wide variety of installations. The installations may include petroleum refineries, petrochemical facilities, gas processing facilities, liquefied natural gas facilities, utility systems, data centers, industrial facilities, warehouses, office buildings or other commercial complexes, campus facilities, computing co-location centers, data centers, power distribution networks, and the like. For example, where the IED is an electrical power monitoring device, it may be coupled to (or be installed in) an electrical power distribution system and configured to sense and store data as electrical parameters (e.g., voltages, currents, imbalances, waveform distortions, symmetrical components, energies and powers, etc.) representing operating characteristics (e.g., changes, magnitudes, slew rates, durations, etc.) of the power distribution system. These parameters and characteristics may be analyzed by a user to evaluate potential performance, reliability, or power quality-related issues. The IED may include at least a controller (which in certain IEDs can be configured to run one or more applications simultaneously, serially, or both), firmware, a memory, a communications interface, and connectors that connect the IED to external systems, devices, and/or components at any voltage level, configuration, and/or type (e.g., ac, dc). At least certain aspects of the monitoring and control functionality of a IED may be embodied in a computer program that is accessible by the IED.

The controller 104 sends data to the at least one process 102 to direct the operations thereof according to the goals of controller 104. The data sent comprises commands that operate various types of process elements, equipment, or assets 114, of the process 102, such as pumps, motors, valves, actuators, electrostatic precipitators, electrolyzers, vibrators, heaters, or the like. The asset 114 may be any mechanical, chemical, electrical, biological, or combined mechanism or set of mechanisms that is used to convert energy and materials into value added products or production. The sensors 106 monitor process 102 at various points and gather data from those points. The sensors 106 then send the data gathered to controller 104. Based on the gathered data, controller 104 can send additional commands to process 102. In this way, the system 100 forms a control feedback loop, where controller 104 reacts to changes in process 102 as observed by sensors 106. Different actions carried out by process 102 according to the commands of controller 104 may change the data being gathered by sensors 106, thus causing further adjustments by controller 104 in response to those changes. By implementing this control feedback loop, the at least one process 102 can be controlled by the controller 104 in an efficient and effective manner.

To ensure safe operation, controller 104 includes one or more condition or asset monitoring systems 116 responsive to sensors 106 for collecting, process measurements such as temperatures, flow rates, pressures, chemical compositions, stream properties, vibration analysis, motor current signature analysis, ultrasonic analysis, thermal analysis, and other measurements on critical assets 114. In the illustrated embodiment, system 100 also includes a historian 118 configured to capture and store industrial data, including process(es), alarm(s), and event history data. According to aspects of the present disclosure, one or more servers, referred to as a data analysis server, or processor, 120, simultaneously analyzes time-series and frequency data from both the process domain and the electrical domain to detect deviations and/or excursions from predefined process conditions indicative of possible electrical trips or perturbations to one or more processes. In an embodiment, the data analysis server 120 is a Windows or Linux server connected to the plant real-time historian 118 for the time-series process data and the electrical Supervisory Control and Data Acquisition (SCADA) system. Preferably, results of the analysis are displayed on a monitor connected to the server 120 and/or communicated other servers or systems such as the real time historian 118.

Setting proper alarm limits and their optimization play a vital role in plant operations. Ineffective plant operating alarm limits are the root cause of poor performance of industrial alarm systems and can eventually lead to plant accidents. One or more embodiments support operational decision-making for determining whether to shelve, or temporarily ignore, a particular alarm. Although described herein in the context of process control devices, it is to be understood that alarms occur in all kinds of manufacturing environments and aspects of the present disclosure are applicable to any activity that can generate alarms in volume.

An alarm shelving tool is provided having a probabilistic view of shelving the alarms and support for the expiration time (if applicable) of a shelved alarm. For example, for an incoming alarm, the operator is shown as having a 90% probability of shelving this alarm and un-shelving the alarm after 180 minutes. In the manner, the alarm shelving tool of the present disclosure helps the operator to focus on important alarms and making quick decisions regarding nuisance alarms. This leads to improved efficiency in plant operations.

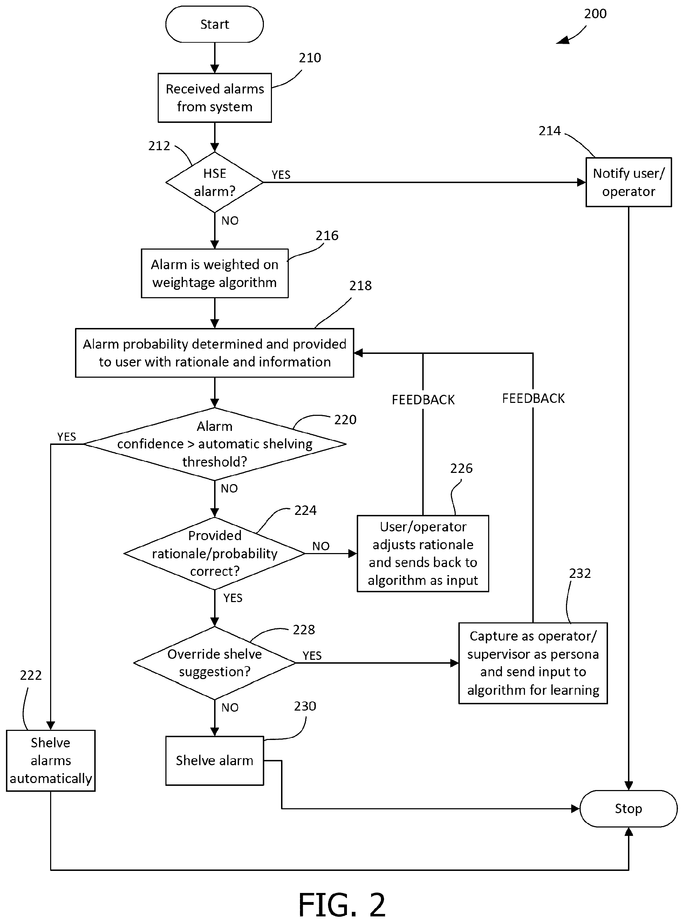

FIG. 2 is a flow diagram illustrating an example process 200 for alarm shelving according to an embodiment. At 210, an alarm shelving tool executing a method embodying aspects of the present disclosure receives one or more alarms from the process control system 100. If the alarm is a Human Safety Environment (HSE) alarm, as determined at 212, the operator is notified at 214 and the process 200 ends because such alarms are not shelved due to their inherent importance. On the other hand, if the alarm is not a HSE alarm, as determined at 212, the process 200 executes an algorithm at 216 for weighting the alarm based on one or more factors described in greater detail below. In this regard, process 200 executes a weightage algorithm. At 218, the algorithm determines a probability score for the alarm as a function of the weighting factors and provides the score to the operator. In other words, process 200 generates a probabilistic determination indicating whether the alarm is to be shelved. In addition, process 200 includes providing supporting information and a rationale for the probability to the operator. In an embodiment, the supporting information includes an estimated time duration before the alarm is un-shelved if the alarm is to be shelved.

The process 200 continues at 220 for determining if the probability score exceeds a predetermined threshold for automatic shelving of the alarm, which occurs at 222. In other words, process 200 evaluates the alarm to determine a shelving probability of the alarm being shelved by determining at 220 if the alarm confidence exceeds a configured threshold for automatic shelving. If the score falls below the predetermined threshold for automatically shelving the alarm, process 200 proceeds to 224 for evaluating whether the rationale for shelving the alarm underlying the probability is correct. If not, the operator adjusts the rationale and provides feedback at 226 for improving the algorithm. If the rationale is correct, the process at 228 provides an opportunity to override the shelving recommendation output by the algorithm. The operator at 228 can choose not to override the recommendation and proceed to shelving the alarm at 230. On the other hand, if the operator decides against shelving the alarm, process 200 inputs this feedback at 232 to the algorithm for learning.

Aspects of the present disclosure weigh every incoming alarm against an algorithm that determines the probability of an alarm to be safely shelved. The shelving probability is based on the weighting algorithm taking into account industrial process information and historical information stored in the decision support databases. In an embodiment, the probability of shelving the alarm is calculated on weightage of one or more of the following factors:
(1) History of alarms and identifying an instance when the same alarm was considered a nuisance alarm;
(2) Shelving history of alarms (e.g., whether the same alarm instance was previously shelved);
(3) Simple/complex condition set for alarm shelving;
(4) Scheduled maintenance of equipment (e.g., equipment replacement as indicated by work orders);
(5) Scheduled device calibration;
(6) State of the equipment before and during the alarm to analyze the impact on the equipment;
(7) Past state of the equipment before, during, and after the alarm to provide a rationale;
(8) Equipment diagnostics;
(9) Equipment condition and its current state; and
(10) History of operator actions performed on specific alarms.

Each of the one or more relevant factors, or characteristics, above has an associated weighting that can be determined automatically or manually. The use of alarm history for identifying when the same alarm was considered a nuisance alarm, is based on a) an alarm flood period and the frequency of the alarm in the flood period, b) chattering and fleeting alarms, and c) correlation / dependency of the alarm on another alarm.

In another embodiment, the alarm shelving tool includes an autonomous mode for filtering out alarms or shelving them.

In yet another embodiment, the alarm shelving tool provides unique color coding to visually indicate to the operator the relative importance of each alarm as a function of the probability calculation (e.g., similar to NAMUR NE 107 Standard).

Aspects of the present disclosure support operator decision-making in alarm shelving, determine the probability of an alarm being shelved using a weighting algorithm taking into account relevant factors or characteristics associated with an industrial process, determine an estimated time duration before the alarm is un-shelved if the alarm is likely to be shelved, provides a rationale for the alarm to be shelved and relevant information supporting the rationale, and learns from operator actions relating to alarms to capture the knowledge of the operator and to adjust the weighting algorithm used to determine the probability of the alarm being shelved to update or refine its performance.

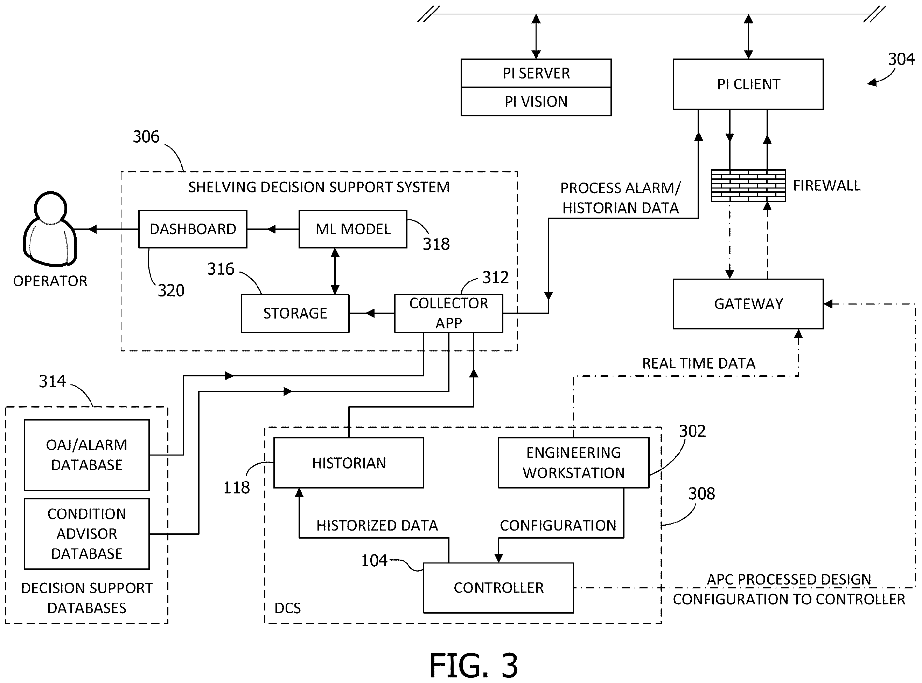

FIG. 3 is a block diagram illustrating further aspects of the control system 100 of FIG. 1 and data communications according to an embodiment. In the illustrated embodiment, an engineering workstation 302 provides real time data (e.g., pressure, volume) of assets 114 to a data management system 304, such as the PI System available from AVEVA Group plc, a member of the Schneider Electric group, using a runtime database from the historian 118. The data management system 304 further communicates alarm information and historian data with a shelving decision support system 306, which executes a shelving decision support engine in accordance with embodiments of the present disclosure. In the illustrated embodiment, controller 104, historian 118, and engineering workstation 302 are part of a distributed control system (DCS) 308.

As shown in FIG. 3, the shelving decision support system 306 executes a collector app 312 of the decision support engine for receiving data from historian 118 as well as data from a plurality of decision support databases (or data sources) 314. The of decision support databases 314 store additional data representative of aspects of process 102, maintenance history, operator shelving history, and the like. In the illustrated embodiment, decision support system 306 includes an operator action journal (OAJ) and alarm database and a condition advisor database but it is to be understood that shelving decision support system 306 may use other sources of data in addition to or instead of the illustrated databases. The collector app 312 maintains the collected data in storage 316 for use by a machine learning (ML) model 318 of the decision support engine. Based on the data, decision support system 306 executes the ML model 318 to provide a probabilistic determination of alarm shelving and presents the resulting information to an operator via a dashboard 320 or the like.

Schneider Electric's EcoStruxure System Advisor for Process Control, which provides system management system auditing and alarm shelving to ensure operational integrity throughout the plant lifecycle, is a suitable implementation environment for shelving decision support system 306.

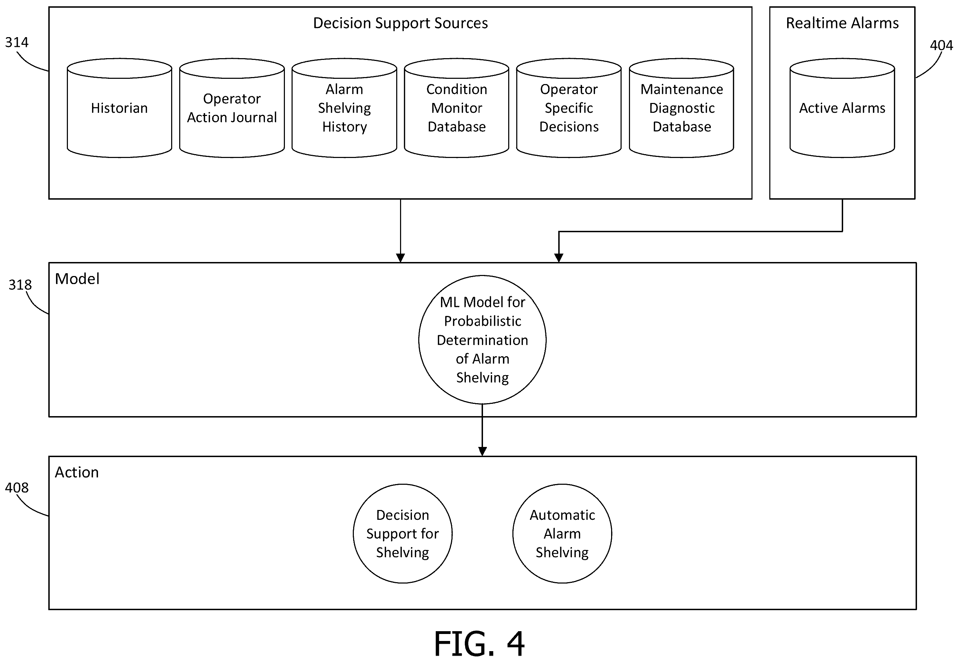

FIG. 4 illustrates an example architecture according to an embodiment. As described above, aspects of the present disclosure include providing feedback regarding shelving decisions to the algorithm for learning. The architecture of FIG. 4 includes one or more sources of information supporting a shelving decision. Such sources include, for example, the one or more databases 314 storing historian data, operator action journal (OAJ) data, alarm shelving history data, condition monitor data, prior operator specific decision data, maintenance diagnostic data, and the like. According to the invention, the decision support data 314 as well as active alarms data 404 are input to the machine learning (ML) model 318 providing a probabilistic determination of alarm shelving, as indicated at 408. As described above, the determination to shelve or not shelve an alarm and the supporting rationale is provided to the operator via dashboard 320 in an embodiment.

According to the invention, the ML model 318 is implemented in shelving decision support system 306. Therefore, the shelving decision support system 306 employs one or more of statistical analyses, data mining, machine learning (ML), deep neural networks, parallel coordinate analyses, rules-based algorithms, etc. to automatically render shelving decisions. Machine learning focuses on the use of statistics-based algorithms to formalize and/or extend the data properties/characteristics of "specific cases" to newly captured data to facilitate performing analysis tasks without explicit instructions. The specific cases mentioned here are used to "teach" or "train" the ML algorithm, building an ML model that is used to consider and analyze new cases, accordingly. Based on this model, an automatic shelving decision is made or support is provided to the operator of making the shelving/no shelving decision.

Commonly assigned Indian Patent Application No. 202111041859, filed September 16, 2021, and commonly assigned U.S. Patent Application No. 17/746,299, filed May 17, 2022, disclose an artificial intelligence (AI) alarm engine suitable for executing the ML model of the present disclosure. In an embodiment, the alarm engine comprises computer-executable instructions executed by a processor of shelving decision support system 306. The Al-based alarm engine receives inputs of asset alarms and process and control narrative via the assets and control devices of process control system 100. In addition, shelving decision support system 306 provides DCS alarm information, historized alarms, and OAJ messages, and current rationalization information to the alarm engine via an advisory system database. Once trained, the Al-based alarm engine outputs an alarm definition with values (i.e., a rationalization) for auto-populating a Master Alarm Database (MADB), which is the authorized listing of rationalized alarms and associated attributes. For example, the MADB stores alarm instance data, including alarm type, alarm priority, alarm class, alarm limit (setpoint), operator action, consequence of inaction, etc. The required input parameters are input into the alarm engine for the system 100 to train and evolve to create an alarm rationalization report (or guide) specific to the industrial plant based on the alarm definitions and values from the MADB.

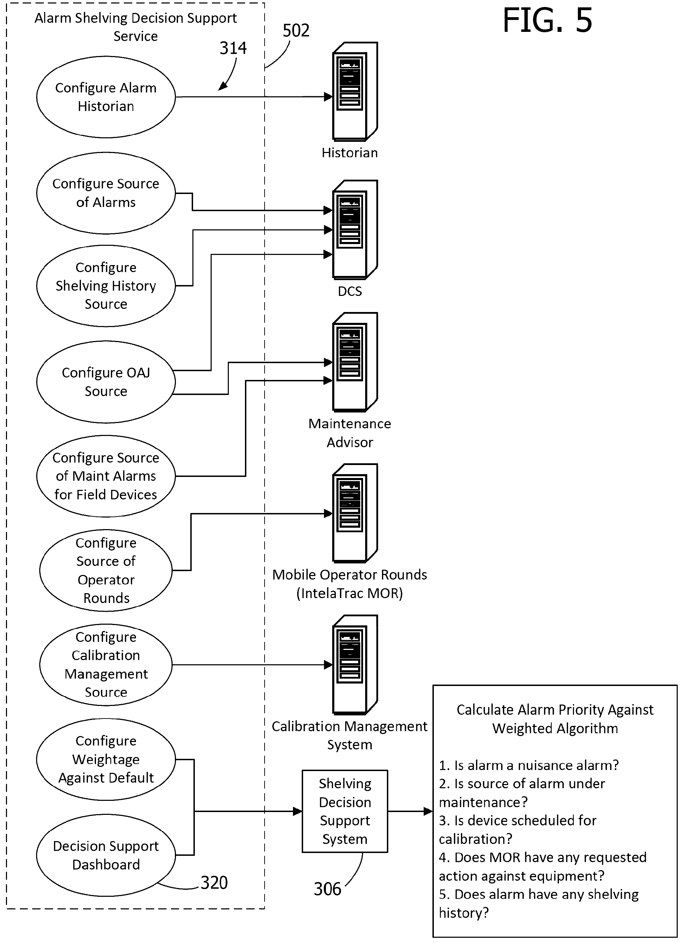

FIG. 5 illustrates an example process for configuring alarm priority according to an embodiment. In accordance with the example process, an alarm shelving decision support service 502 receives input from a user, such as an engineer, for use in configuring the various decision support sources 314. The example of FIG. 5 shows data sources 314 including an alarm historian, a source of alarms, a shelving history source, an OAJ source, a source of maintenance alarms for field devices, an operator rounds source, and a calibration management source. In addition, the shelving decision support system 306 receives input from the user to configure the weightage algorithm relative to default weighting. In an embodiment, additional data sources, such as alarm data relating to, for example, upper and lower limits on equipment, feed the algorithm. In another embodiment, the ML model of shelving decision support system 306 learns this additional data.

The same or a different user, engineer, operator, etc. interfaces with decision support dashboard 320 in the illustrated process. As described above, the ML model 318 of shelving decision support system 306 provides a probabilistic determination of alarm shelving, based on, for example, a calculation of alarm priority against a weightage algorithm. For example, the weightage algorithm considers whether the alarm a nuisance alarm, whether the source of the alarm is under maintenance; whether the associated device is scheduled for calibration, whether the mobile operator rounds have any requested action against the equipment, and whether there is a previous history of shelving the alarm.

In an embodiment, a method for probabilistic determination of alarm priorities for shelving comprises receiving an indication of an alarm from a distributed control system (DCS) associated with at least one industrial process and evaluating the alarm to determine a probability of the alarm being shelved and an estimated time duration before the alarm is un-shelved if the alarm is likely to be shelved. The alarm probability is based on a weighting algorithm taking into account one or more relevant factors or characteristics associated with the at least one industrial process. In response to the alarm probability exceeding a threshold, the method provides a rationale for the alarm being shelved and relevant information supporting the rationale. The method further includes evaluating the alarm probability in view of the provided alarm rationale and relevant information supporting the alarm rationale and, in response to determining the alarm rationale is not acceptable, adjusting the alarm rationale and providing the adjusted alarm rational to the weighting algorithm as an input for adjusting or tuning the weighting algorithm. The method also comprises determining if the alarm should be shelved and for what period of time the alarm should be shelved in response to determining the alarm rationale is acceptable and shelving the alarm for the determined period of time in response to determining the alarm should be shelved.

A method embodying aspects of the present disclosure further includes analyzing operator actions to learn and capture knowledge of the operator and updating or refining the weighting algorithm based on the learned and captured knowledge of operator. In an embodiment, the method during comprises extracting possible alarm types from one or more alarm databases, evaluating the possible alarm types to identify alarm types relevant to the at least one industrial process, and identifying the one or more relevant factors or characteristics to consider in the weighting algorithm based, at least in part, on the identified alarm types.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

## Claims

1. Method of managing alarms in a process control system (100), the method comprising:
receiving, by a shelving decision support engine (306), industrial process information collected from the process control system (100), wherein the industrial process information includes an indication of an alarm associated with at least one industrial process;
storing the collected industrial process information in one or more decision support databases (314);
further storing historical information relating to past alarm shelving decisions and operator specific decisions in the one or more decision support databases (314);
the method being **characterized in that** it further comprises:
executing, by the shelving decision support engine (306), a weighting algorithm on the alarm based on the industrial process information and the historical information stored in the decision support databases (314), wherein executing the weighting algorithm comprises executing a machine-learned model (318), and
wherein the weighting algorithm is a function of one or more relevant factors associated with the at least one industrial process having weights assigned thereto;
generating, by the shelving decision support engine (306), a probabilistic determination of alarm priority for shelving the alarm as a function of the weighting algorithm; and
automatically shelving the alarm for a determined period of time in response to the probabilistic determination indicating the alarm is to be shelved.

2. Method as set forth in claim 1, wherein generating the probabilistic determination comprises evaluating the alarm to determine a shelving probability of the alarm being shelved and an estimated time duration before the alarm is un-shelved if the alarm is to be shelved, the shelving probability being based on the weighting algorithm taking into account the industrial process information and the historical information stored in the decision support databases (314).

3. Method as set forth in claim 2, further comprising:
receiving, by the shelving decision support engine (306), operator input (108, 110) assessing the shelving probability in view of a rationale for the alarm being shelved and relevant information supporting the alarm rationale; and
adjusting, by the shelving decision support engine (306), the weighting algorithm in response to the operator input (108, 110) assessing the shelving probability.

4. Method as set forth in any of the claims 1to 3, wherein executing the machine-learned model comprises training the machine-learned model based on the historical information stored in the decision support databases (314).

5. Method as set forth in any of claims 1 to 4, wherein the decision support databases (314) store the one or more relevant factors associated with the at least one industrial process, including one or more of: (a) history of alarms and instances an alarm of the same type of the present alarm has been identified as a nuisance alarm; (b) shelving history of alarms; (c) simple/complex condition set for alarm shelving; (d) maintenance schedule for equipment; (e) calibration schedule for equipment; (f) state of equipment before and during the alarm to analyze an impact on the equipment; (g) past state of the equipment before, during, and post the alarm to provide a rationale; (h) equipment diagnostics; and (i) equipment conditions and current state thereof.

6. Method as set forth in any of claims 1 to 5, further comprising:
extracting possible alarm types from one or more alarm databases;
evaluating the possible alarm types to identify alarm types relevant to the at least one industrial process; and
identifying the one or more relevant factors to consider in the weighting algorithm based, at least in part, on the identified alarm types.

7. Method as set forth in any of claims 1 to 6, further comprising:
evaluating, by the shelving decision support engine (306), if the alarm is a Human Safety Environment (HSE) alarm or another alarm type; and
in response to determining the alarm is an HSE alarm, providing a notification to the operator indicating the alarm is an HSE alarm.

8. An alarm management system comprising:
a shelving decision support engine (306) receiving and responsive to industrial process information collected from a process control system (100), the industrial process information including an indication of an alarm associated with at least one industrial process, the shelving decision support comprising a machine-learned model for executing a weighting algorithm;
one or more decision support databases (314) storing the collected industrial process information and further storing historical information relating to past alarm shelving decisions and operator specific decisions;
the alarm management system being **characterized in that** it further comprises:
a memory storing computer-executable instructions that, when executed by the shelving decision support engine (306), configure the shelving decision support engine (306) for:
executing the weighting algorithm on the alarm based on the industrial process information and the historical information stored in the decision support databases (314), wherein the weighting algorithm is a function of one or more relevant factors associated with the at least one industrial process having weights assigned thereto;
generating a probabilistic determination of alarm priority for shelving the alarm as a function of the weighting algorithm; and
automatically shelving the alarm for a determined period of time in response to the probabilistic determination indicating the alarm is to be shelved.

9. System as set forth in claim 8, wherein generating the probabilistic determination comprises evaluating the alarm to determine a shelving probability of the alarm being shelved and an estimated time duration before the alarm is un-shelved if the alarm is to be shelved, the shelving probability being based on the weighting algorithm taking into account the industrial process information and the historical information stored in the decision support databases (314).

10. System as set forth in claim 9, wherein the computer-executable instructions stored in the memory, when executed by the shelving decision support engine (306), further configure the shelving decision support engine (306) for providing, in response to the shelving probability exceeding a predetermined threshold, a rationale for the alarm being shelved and relevant information supporting the rationale.

11. System as set forth in claim 10, wherein the computer-executable instructions stored in the memory, when executed by the shelving decision support engine (306), further configure the shelving decision support engine (306) for:
receiving operator input (108, 110) assessing the shelving probability in view of the provided alarm rationale and relevant information supporting the alarm rationale; and
adjusting the weighting algorithm in response to the operator input (108, 110) assessing the shelving probability.

12. System as set forth in any of claims 8 to 11, wherein the computer-executable instructions stored in the memory, when executed by the shelving decision support engine (306), further configure the shelving decision support engine (306) for training the machine-learned model based on the historical information stored in the decision support databases (314).

13. System as set forth in any of claims 8 to 12, wherein the decision support databases (314) store the one or more relevant factors associated with the at least one industrial process, including one or more of: (a) history of alarms and instances an alarm of the same type of the present alarm has been identified as a nuisance alarm; (b) shelving history of alarms; (c) simple/complex condition set for alarm shelving; (d) maintenance schedule for equipment; (e) calibration schedule for equipment; (f) state of equipment before and during the alarm to analyze an impact on the equipment; (g) past state of the equipment before, during, and post the alarm to provide a rationale; (h) equipment diagnostics; and (i) equipment conditions and current state thereof.

14. System as set forth in any of claims 8 to 13, wherein the computer-executable instructions stored in the memory, when executed by the shelving decision support engine (306), further configure the shelving decision support engine (306) for:
evaluating, by the shelving decision support engine (306), if the alarm is a Human Safety Environment (HSE) alarm or another alarm type; and
in response to determining the alarm is an HSE alarm, providing a notification to the operator indicating the alarm is an HSE alarm.

## Patentansprüche

1. Verfahren zur Verwaltung von Alarmen in einem Prozessleitsystem (100), wobei das Verfahren Folgendes umfasst:
Empfangen von aus dem Prozessleitsystem (100) erfassten industriellen Prozessinformationen durch eine Entscheidungsunterstützungseinheit für die Alarmzurückstellung (306), wobei die industriellen Prozessinformationen einen Hinweis auf einen Alarm enthalten, der mit mindestens einem industriellen Prozess verknüpft ist;
Speichern der erfassten industriellen Prozessinformationen in einer oder mehreren Entscheidungsunterstützungsdatenbanken (314);
weiteres Speichern historischer Informationen bezüglich vergangener Entscheidungen zur Alarmzurückstellung und bedienerbezogener Entscheidungen in der einen oder den mehreren Entscheidungsunterstützungsdatenbanken (314);
wobei das Verfahren **dadurch gekennzeichnet ist, dass** es ferner Folgendes umfasst:
Ausführen eines Gewichtungsalgorithmus für den Alarm durch die Entscheidungsunterstützungseinheit für die Alarmzurückstellung (306) auf der Grundlage der industriellen Prozessinformationen und der in den Entscheidungsunterstützungsdatenbanken (314) gespeicherten historischen Informationen, wobei das Ausführen des Gewichtungsalgorithmus das Ausführen eines maschinell gelernten Modells (318) umfasst und wobei der Gewichtungsalgorithmus eine Funktion eines oder mehrerer relevanter Faktoren ist, die mit dem mindestens einen industriellen Prozess verknüpft sind und denen Gewichtungen zugewiesen sind;
Erzeugen einer probabilistischen Bestimmung der Alarmpriorität für die Zurückstellung des Alarms durch die Entscheidungsunterstützungseinheit für die Alarmzurückstellung (306) in Abhängigkeit von dem Gewichtungsalgorithmus; und
automatisches Zurückstellen des Alarms für einen bestimmten Zeitraum als Reaktion auf die probabilistische Bestimmung, die anzeigt, dass der Alarm zurückgestellt werden soll.

2. Verfahren nach Anspruch 1, wobei das Erzeugen der probabilistischen Bestimmung das Bewerten des Alarms umfasst, um eine Zurückstellungswahrscheinlichkeit für die Zurückstellung des Alarms sowie eine geschätzte Zeitdauer bis zur Aufhebung der Zurückstellung des Alarms (falls dieser zurückgestellt werden soll) zu ermitteln, wobei die Zurückstellungswahrscheinlichkeit auf dem Gewichtungsalgorithmus unter Berücksichtigung der industriellen Prozessinformationen und der in den Entscheidungsunterstützungsdatenbanken (314) gespeicherten historischen Informationen basiert.

3. Verfahren nach Anspruch 2, ferner umfassend:
Empfangen einer Bedienereingabe (108, 110) durch die Entscheidungsunterstützungseinheit für die Alarmzurückstellung (306), welche die Zurückstellungswahrscheinlichkeit im Hinblick auf eine Begründung für die Zurückstellung des Alarms und relevante Informationen zur Untermauerung dieser Begründung bewertet; und
Anpassen des Gewichtungsalgorithmus durch die Entscheidungsunterstützungseinheit für die Alarmzurückstellung (306) als Reaktion auf die Bedienereingabe (108, 110), welche die Zurückstellungswahrscheinlichkeit bewertet.

4. Verfahren nach einem der Ansprüche 1 bis 3, wobei das Ausführen des maschinell gelernten Modells das Trainieren des maschinell gelernten Modells auf der Grundlage der in den Entscheidungsunterstützungsdatenbanken (314) gespeicherten historischen Informationen umfasst.

5. Verfahren nach einem der Ansprüche 1 bis 4, wobei die Entscheidungsunterstützungsdatenbanken (314) den einen oder die mehreren relevanten Faktoren speichern, die dem mindestens einen industriellen Prozess zugeordnet sind, einschließlich eines oder mehrerer der folgenden Elemente: (a) Historie von Alarmen und Fällen, in denen ein Alarm desselben Typs wie der aktuelle Alarm als Fehlalarm (Nuisance-Alarm) identifiziert wurde; (b) Historie der Zurückstellung (Shelving) von Alarmen; (c) einfache/komplexe Bedingungssätze für die Alarmzurückstellung; (d) Wartungsplan für Ausrüstung; (e) Kalibrierungsplan für Ausrüstung; (f) Zustand der Ausrüstung vor und während des Alarms zur Analyse einer Auswirkung auf die Ausrüstung; (g) vergangener Zustand der Ausrüstung vor, während und nach dem Alarm zur Bereitstellung einer Begründung; (h) Ausrüstungsdiagnose; und (i) Ausrüstungsbedingungen und deren aktueller Zustand.

6. Verfahren nach einem der Ansprüche 1 bis 5, ferner umfassend:
Extrahieren möglicher Alarmtypen aus einer oder mehreren Alarmdatenbanken;
Bewerten der möglichen Alarmtypen, um für den mindestens einen industriellen Prozess relevante Alarmtypen zu identifizieren; und
Identifizieren des einen oder der mehreren relevanten Faktoren, die im Gewichtungsalgorithmus zu berücksichtigen sind, basierend zumindest teilweise auf den identifizierten Alarmtypen.

7. Verfahren nach einem der Ansprüche 1 bis 6, ferner umfassend:
Bewerten durch die Entscheidungsunterstützungskomponente für die Alarmzurückstellung (306), ob es sich bei dem Alarm um einen HSE-Alarm (Human Safety Environment - Sicherheit, Gesundheit und Umwelt) oder einen anderen Alarmtyp handelt; und
als Reaktion auf die Feststellung, dass es sich bei dem Alarm um einen HSE-Alarm handelt, Bereitstellen einer Benachrichtigung an den Bediener, die darauf hinweist, dass es sich bei dem Alarm um einen HSE-Alarm handelt.

8. Alarmmanagementsystem, umfassend:
eine Entscheidungsunterstützungseinheit (306) für das Zurückstellen von Alarmen, die von einem Prozessleitsystem (100) erfasste industrielle Prozessinformationen empfängt und auf diese reagiert, wobei die industriellen Prozessinformationen einen Hinweis auf einen Alarm enthalten, der mit mindestens einem industriellen Prozess verknüpft ist, und wobei die Entscheidungsunterstützung für das Zurückstellen ein maschinell gelerntes Modell zur Ausführung eines Gewichtungsalgorithmus umfasst;
eine oder mehrere Entscheidungsunterstützungsdatenbanken (314), die die erfassten industriellen Prozessinformationen sowie historische Informationen bezüglich früherer Entscheidungen zum Zurückstellen von Alarmen und bedienerbezogener Entscheidungen speichern;
wobei das Alarmmanagementsystem **dadurch gekennzeichnet ist, dass** es ferner umfasst:
einen Speicher, der computerausführbare Anweisungen speichert, die bei Ausführung durch die Entscheidungsunterstützungseinheit (306) die Entscheidungsunterstützungseinheit (306) dazu konfigurieren:
den Gewichtungsalgorithmus auf den Alarm anzuwenden, basierend auf den industriellen Prozessinformationen und den in den Entscheidungsunterstützungsdatenbanken (314) gespeicherten historischen Informationen, wobei der Gewichtungsalgorithmus eine Funktion eines oder mehrerer relevanter Faktoren ist, die mit dem mindestens einen industriellen Prozess verknüpft sind und denen Gewichtungen zugeordnet sind;
eine probabilistische Bestimmung der Alarmpriorität für das Zurückstellen des Alarms in Abhängigkeit von dem Gewichtungsalgorithmus zu erzeugen; und
den Alarm automatisch für einen bestimmten Zeitraum zurückzustellen, als Reaktion auf die probabilistische Bestimmung, die anzeigt, dass der Alarm zurückgestellt werden soll.

9. System nach Anspruch 8, wobei das Erzeugen der probabilistischen Bestimmung das Bewerten des Alarms umfasst, um eine Zurückstellungswahrscheinlichkeit für das Zurückstellen des Alarms sowie eine geschätzte Zeitdauer bis zur Aufhebung des Zurückstellens des Alarms (falls der Alarm zurückgestellt werden soll) zu ermitteln, wobei die Zurückstellungswahrscheinlichkeit auf dem Gewichtungsalgorithmus unter Berücksichtigung der industriellen Prozessinformationen und der in den Entscheidungsunterstützungsdatenbanken (314) gespeicherten historischen Informationen basiert.

10. System nach Anspruch 9, wobei die im Speicher gespeicherten computerausführbaren Anweisungen bei Ausführung durch die Entscheidungsunterstützungseinheit (306) die Entscheidungsunterstützungseinheit (306) ferner dazu konfigurieren, als Reaktion darauf, dass die Zurückstellungswahrscheinlichkeit einen vorbestimmten Schwellenwert überschreitet, eine Begründung für das Zurückstellen des Alarms sowie relevante Informationen zur Stützung der Begründung bereitzustellen.

11. System nach Anspruch 10, wobei die im Speicher gespeicherten computerausführbaren Anweisungen, wenn sie von der Entscheidungsunterstützungseinheit für die Alarmzurückstellung (306) ausgeführt werden, die Entscheidungsunterstützungseinheit für die Alarmzurückstellung (306) ferner dazu konfigurieren:
eine Bedienereingabe (108, 110) zu empfangen, welche die Wahrscheinlichkeit einer Alarmzurückstellung unter Berücksichtigung der bereitgestellten Alarmbegründung und relevanter, die Alarmbegründung stützender Informationen bewertet; und
den Gewichtungsalgorithmus als Reaktion auf die Bedienereingabe (108, 110), welche die Wahrscheinlichkeit einer Alarmzurückstellung bewertet, anzupassen.

12. System nach einem der Ansprüche 8 bis 11, wobei die im Speicher gespeicherten computerausführbaren Anweisungen, wenn sie von der Entscheidungsunterstützungseinheit für die Alarmzurückstellung (306) ausgeführt werden, die Entscheidungsunterstützungseinheit für die Alarmzurückstellung (306) ferner dazu konfigurieren, das maschinell gelernte Modell auf der Grundlage der in den Entscheidungsunterstützungsdatenbanken (314) gespeicherten historischen Informationen zu trainieren.

13. System nach einem der Ansprüche 8 bis 12, wobei die Entscheidungsunterstützungsdatenbanken (314) den einen oder die mehreren relevanten Faktoren speichern, die mit dem mindestens einen industriellen Prozess verknüpft sind, einschließlich eines oder mehrerer der folgenden Elemente: (a) Historie von Alarmen und Fällen, in denen ein Alarm desselben Typs wie der aktuelle Alarm als störender Alarm (Nuisance Alarm) identifiziert wurde; (b) Historie der Alarmzurückstellungen; (c) einfacher/komplexer Bedingungssatz für die Alarmzurückstellung; (d) Wartungsplan für Ausrüstung; (e) Kalibrierungsplan für Ausrüstung; (f) Zustand der Ausrüstung vor und während des Alarms zur Analyse einer Auswirkung auf die Ausrüstung; (g) früherer Zustand der Ausrüstung vor, während und nach dem Alarm zur Bereitstellung einer Begründung; (h) Ausrüstungsdiagnose; und (i) Ausrüstungsbedingungen und deren aktueller Zustand.

14. System nach einem der Ansprüche 8 bis 13, wobei die im Speicher gespeicherten computerausführbaren Anweisungen, wenn sie von der Entscheidungsunterstützungseinheit für die Alarmzurückstellung (306) ausgeführt werden, die Entscheidungsunterstützungseinheit für die Alarmzurückstellung (306) ferner dazu konfigurieren:
durch die Entscheidungsunterstützungseinheit für die Alarmzurückstellung (306) zu bewerten, ob es sich bei dem Alarm um einen HSE-Alarm (Human Safety Environment - Sicherheit, Gesundheit und Umwelt) oder einen anderen Alarmtyp handelt; und
als Reaktion auf die Feststellung, dass es sich bei dem Alarm um einen HSE-Alarm handelt, Bereitstellen einer Benachrichtigung an den Bediener, die anzeigt, dass es sich bei dem Alarm um einen HSE-Alarm handelt.

## Revendications

1. Procédé de gestion d'alarmes dans un système de commande de processus (100), le procédé comprenant:
la réception, par un moteur d'aide à la décision de mise en attente (306), d'informations de processus industriel collectées auprès du système de commande de processus (100), lesdites informations de processus industriel incluant une indication d'une alarme associée à au moins un processus industriel;
le stockage des informations de processus industriel collectées dans une ou plusieurs bases de données d'aide à la décision (314);
le stockage supplémentaire d'informations historiques relatives à des décisions passées de mise en attente d'alarmes et à des décisions spécifiques à des opérateurs dans ladite ou lesdites bases de données d'aide à la décision (314);
le procédé étant **caractérisé en ce qu'**il comprend en outre:
l'exécution, par le moteur d'aide à la décision de mise en attente (306), d'un algorithme de pondération sur l'alarme sur la base des informations de processus industriel et des informations historiques stockées dans les bases de données d'aide à la décision (314), l'exécution de l'algorithme de pondération comprenant l'exécution d'un modèle issu de l'apprentissage automatique (318), et l'algorithme de pondération étant fonction d'un ou plusieurs facteurs pertinents associés audit au moins un processus industriel, auxquels sont attribuées des pondérations;
la génération, par le moteur d'aide à la décision de mise en attente (306), d'une détermination probabiliste de la priorité de l'alarme pour la mise en attente de l'alarme en fonction de l'algorithme de pondération; et
la mise en attente automatique de l'alarme pendant une durée déterminée en réponse à la détermination probabiliste indiquant que l'alarme doit être mise en attente.

2. Procédé selon la revendication 1, dans lequel la génération de la détermination probabiliste comprend l'évaluation de l'alarme pour déterminer une probabilité de mise en attente de l'alarme et une durée estimée avant que l'alarme ne soit retirée de l'état de mise en attente si l'alarme doit être mise en attente, la probabilité de mise en attente étant basée sur l'algorithme de pondération prenant en compte les informations de processus industriel et les informations historiques stockées dans les bases de données d'aide à la décision (314).

3. Procédé selon la revendication 2, comprenant en outre:
la réception, par le moteur d'aide à la décision de mise en attente (306), d'une entrée d'opérateur (108, 110) évaluant la probabilité de mise en attente au regard d'une justification de la mise en attente de l'alarme et d'informations pertinentes étayant la justification de l'alarme; et
l'ajustement, par le moteur d'aide à la décision de mise en attente (306), de l'algorithme de pondération en réponse à l'entrée d'opérateur (108, 110) évaluant la probabilité de mise en attente.

4. Procédé selon l'une quelconque des revendications 1 à 3, dans lequel l'exécution du modèle d'apprentissage automatique comprend l'entraînement du modèle d'apprentissage automatique sur la base des informations historiques stockées dans les bases de données d'aide à la décision (314).

5. Procédé selon l'une quelconque des revendications 1 à 4, dans lequel les bases de données d'aide à la décision (314) stockent le ou les facteurs pertinents associés à l'au moins un processus industriel, incluant un ou plusieurs des éléments suivants: (a) historique des alarmes et des occurrences où une alarme du même type que l'alarme actuelle a été identifiée comme une alarme intempestive; (b) historique de mise en attente (shelving) des alarmes; (c) ensemble de conditions simples/complexes pour la mise en attente des alarmes; (d) calendrier de maintenance des équipements; (e) calendrier d'étalonnage des équipements; (f) état de l'équipement avant et pendant l'alarme pour analyser un impact sur l'équipement; (g) état passé de l'équipement avant, pendant et après l'alarme pour fournir une justification; (h) diagnostics de l'équipement; et (i) conditions de l'équipement et état actuel de celui-ci.

6. Procédé selon l'une quelconque des revendications 1 à 5, comprenant en outre:
l'extraction de types d'alarmes possibles à partir d'une ou plusieurs bases de données d'alarmes;
l'évaluation des types d'alarmes possibles pour identifier les types d'alarmes pertinents pour l'au moins un processus industriel; et
l'identification du ou des facteurs pertinents à prendre en compte dans l'algorithme de pondération sur la base, au moins en partie, des types d'alarmes identifiés.

7. Procédé selon l'une quelconque des revendications 1 à 6, comprenant en outre:
l'évaluation, par le moteur d'aide à la décision de mise en attente (306), du fait de savoir si l'alarme est une alarme de type HSE (Hygiène, Sécurité, Environnement) ou un autre type d'alarme; et
en réponse à la détermination que l'alarme est une alarme HSE, la fourniture d'une notification à l'opérateur indiquant que l'alarme est une alarme HSE.

8. Système de gestion d'alarmes comprenant:
un moteur d'aide à la décision de mise en attente (306) recevant des informations de processus industriel collectées auprès d'un système de commande de processus (100) et réagissant à celles-ci, les informations de processus industriel incluant une indication d'une alarme associée à au moins un processus industriel, l'aide à la décision de mise en attente comprenant un modèle issu d'un apprentissage automatique pour exécuter un algorithme de pondération;
une ou plusieurs bases de données d'aide à la décision (314) stockant les informations de processus industriel collectées et stockant en outre des informations historiques relatives à des décisions passées de mise en attente d'alarmes et à des décisions spécifiques aux opérateurs;
le système de gestion d'alarmes étant **caractérisé en ce qu'**il comprend en outre:
une mémoire stockant des instructions exécutables par ordinateur qui, lorsqu'elles sont exécutées par le moteur d'aide à la décision de mise en attente (306), configurent le moteur d'aide à la décision de mise en attente (306) pour:
exécuter l'algorithme de pondération sur l'alarme sur la base des informations de processus industriel et des informations historiques stockées dans les bases de données d'aide à la décision (314), l'algorithme de pondération étant fonction d'un ou plusieurs facteurs pertinents associés audit au moins un processus industriel, auxquels sont attribuées des pondérations;
générer une détermination probabiliste de la priorité de l'alarme pour la mise en attente de l'alarme en fonction de l'algorithme de pondération; et
mettre automatiquement l'alarme en attente pendant une durée déterminée en réponse à la détermination probabiliste indiquant que l'alarme doit être mise en attente.

9. Système selon la revendication 8, dans lequel la génération de la détermination probabiliste comprend l'évaluation de l'alarme pour déterminer une probabilité de mise en attente de l'alarme et une durée estimée avant que l'alarme ne soit retirée de l'état de mise en attente si l'alarme doit être mise en attente, la probabilité de mise en attente étant basée sur l'algorithme de pondération prenant en compte les informations de processus industriel et les informations historiques stockées dans les bases de données d'aide à la décision (314).

10. Système selon la revendication 9, dans lequel les instructions exécutables par ordinateur stockées dans la mémoire, lorsqu'elles sont exécutées par le moteur d'aide à la décision de mise en attente (306), configurent en outre le moteur d'aide à la décision de mise en attente (306) pour fournir, en réponse au dépassement d'un seuil prédéterminé par la probabilité de mise en attente, une justification de la mise en attente de l'alarme ainsi que des informations pertinentes étayant cette justification.

11. Système selon la revendication 10, dans lequel les instructions exécutables par ordinateur stockées dans la mémoire, lorsqu'elles sont exécutées par le moteur d'aide à la décision de mise en attente (306), configurent en outre le moteur d'aide à la décision de mise en attente (306) pour:
recevoir une entrée d'opérateur (108, 110) évaluant la probabilité de mise en attente au vu de la justification d'alarme fournie et des informations pertinentes étayant cette justification; et
ajuster l'algorithme de pondération en réponse à l'entrée d'opérateur (108, 110) évaluant la probabilité de mise en attente.

12. Système selon l'une quelconque des revendications 8 à 11, dans lequel les instructions exécutables par ordinateur stockées dans la mémoire, lorsqu'elles sont exécutées par le moteur d'aide à la décision de mise en attente (306), configurent en outre le moteur d'aide à la décision de mise en attente (306) pour entraîner le modèle d'apprentissage automatique sur la base des informations historiques stockées dans les bases de données d'aide à la décision (314).

13. Système selon l'une quelconque des revendications 8 à 12, dans lequel les bases de données d'aide à la décision (314) stockent le ou les facteurs pertinents associés à l'au moins un procédé industriel, incluant un ou plusieurs des éléments suivants: (a) historique des alarmes et des cas où une alarme du même type que l'alarme actuelle a été identifiée comme une alarme intempestive; (b) historique de mise en attente des alarmes; (c) ensemble de conditions simples/complexes pour la mise en attente d'une alarme; (d) calendrier de maintenance des équipements; (e) calendrier d'étalonnage des équipements; (f) état de l'équipement avant et pendant l'alarme pour analyser un impact sur l'équipement; (g) état passé de l'équipement avant, pendant et après l'alarme pour fournir une justification; (h) diagnostics de l'équipement; et (i) conditions de l'équipement et état actuel de celui-ci.

14. Système selon l'une quelconque des revendications 8 à 13, dans lequel les instructions exécutables par ordinateur stockées dans la mémoire, lorsqu'elles sont exécutées par le moteur d'aide à la décision de mise en attente (306), configurent en outre le moteur d'aide à la décision de mise en attente (306) pour:
évaluer, par le moteur d'aide à la décision de mise en attente (306), si l'alarme est une alarme HSE (Hygiène, Sécurité, Environnement) ou un autre type d'alarme; et
en réponse à la détermination du fait que l'alarme est une alarme HSE, fournir à l'opérateur une notification indiquant que l'alarme est une alarme HSE.
